# EUROPEAN PATENT APPLICATION

(11) **EP 4 586 372 A1**
(43) Date of publication of application: **16.07.2025**
(21) Application number: 23952428.3
(22) Date of filing: 30.11.2023
(51) Int. Cl.: H01M 50/131, H01M 50/133

(54) **BATTERY CELL, BATTERY, ELECTRICAL DEVICE AND ENERGY STORAGE APPARATUS**

(71) Applicant: Contemporary Amperex Technology Co., Limited, Ningde, Fujian 352100 (CN)
(72) Inventor: CAO, Mengkai, Ningde Fujian 352100 (CN); LIN, Denghua, Ningde Fujian 352100 (CN); CAI, Xianghu, Ningde Fujian 352100 (CN); JIANG, Xiangwei, Ningde Fujian 352100 (CN); YANG, Xiao, Ningde Fujian 352100 (CN); HUANG, Shoujun, Ningde Fujian 352100 (CN); ZHENG, Yulian, Ningde Fujian 352100 (CN); WANG, Peng, Ningde Fujian 352100 (CN)
(74) Representative: Gong, Jinping
(86) International application number: PCT/CN2023/135626
(87) International publication number: WO 2025/111970

(57) **Abstract**

Embodiments of this application provide a battery cell, a battery, an electric device, and an energy storage apparatus. The battery cell includes a housing. The housing includes a shell and an end cover, where the shell is provided with an opening, the shell includes a first wall, the first wall includes a first opening portion and a first body sequentially distributed along a first direction, the first direction is parallel to a thickness direction of the end cover, the first body is farther away from the opening than the first opening portion, a thickness of the first opening portion is greater than a thickness of the first body, and the end cover is connected to the first wall and closes the opening. A largest thickness of the first opening portion is denoted as t₁, the thickness of the first body is denoted as t₂, and a dimension of the first wall in a second direction is denoted as a, satisfying 120≤a/(t₁-t₂)≤6000, where the second direction, a thickness direction of the first wall, and the first direction are perpendicular to each other. The technical solutions of the embodiments of this application can improve the reliability of the battery.

## Description

### TECHNICAL FIELD

This application relates to the field of battery technologies, in particular to a battery cell, a battery, an electric device, and an energy storage apparatus.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

In the process of battery manufacturing, the reliability of the battery is an issue that cannot be ignored. Therefore, how reliability of batteries is improved is an urgent technical problem that needs to be solved in battery technology.

### SUMMARY

This application provides a battery cell, a battery, an electric device, and an energy storage apparatus, so as to improve the reliability of the battery.

This application is implemented using the following technical solutions.

According to a first aspect, an embodiment of this application provides a battery cell, where the battery cell includes a housing. The housing includes a shell and an end cover, where the shell is provided with an opening, the shell includes a first wall, the first wall includes a first opening portion and a first body sequentially distributed along a first direction, the first direction is parallel to a thickness direction of the end cover, the first body is farther away from the opening than the first opening portion, a thickness of the first opening portion is greater than a thickness of the first body, and the end cover is connected to the first opening portion and closes the opening. A largest thickness of the first opening portion is denoted as t₁, the thickness of the first body is denoted as t₂, and a dimension of the first wall in a second direction is denoted as a, satisfying 120≤a/(t1-t2)≤6000, where the second direction, a thickness direction of the first wall, and the first direction are perpendicular to each other.

For the battery cell according to this embodiment of this application, a larger dimension of the first wall in the second direction indicates a greater need to increase the strength of the first opening portion. The dimension of the first wall in the second direction and a difference between the largest thickness of the first opening portion and the thickness of the first body satisfy the foregoing relationship, facilitating processing and manufacturing, such that the first opening portion can have relatively high strength, which can reduce the risk of fatigue cracking of the shell near the welding zone between the shell and the end cover and improve the reliability of the battery cell. In addition, the first opening portion occupies a relatively small assembly space, such that the battery cell can have a relatively high energy density.

According to some embodiments of this application, 400≤a/(t₁-t₂)≤3000, and optionally, 500≤a/(t₁-t₂)≤2000.

In the foregoing solution, as compared with 120≤a/(t1-t2)≤6000, when 400≤a/(t₁-t₂)≤3000 or 500≤a/(t₁-t₂)≤2000, the processing and manufacturing difficulty is low, the first opening portion can have relatively high strength, and the battery cell can have a relatively high energy density.

According to some embodiments of this application, 70 mm≤a≤600 mm.

In the foregoing solution, the dimension a of the first wall in the second direction satisfies the foregoing relationship, which makes the battery cell have a relatively large dimension in the second direction, and can make the battery cell have a relatively high energy density.

According to some embodiments of this application, 100 mm≤a≤500 mm.

In the foregoing solution, as compared with 70 mm≤a≤600 mm, when 100 mm≤a≤500 mm, the battery cell can have a relatively high energy density, with ease of processing and manufacturing.

According to some embodiments of this application, the first opening portion includes a first section and a second section connected to each other, where the first section, the second section, and the first body are sequentially distributed along the first direction, a largest thickness of the second section is greater than the thickness of the first body, the largest thickness of the second section is greater than a largest thickness of the first section, and the end cover is connected to the first section.

In the foregoing solution, the first section, the second section, and the first body are sequentially distributed along the first direction; the end cover is connected to the first section, such that the second section is adjacent to a junction between the end cover and the first section; and the largest thickness of the second section is greater than the largest thickness of the first body, and the largest thickness of the second section is greater than the largest thickness of the first section, such that the first opening portion has relatively high strength, which can reduce the risk of fatigue cracking of the shell near the welding zone between the shell and the end cover and improve the service life and reliability of the battery cell.

According to some embodiments of this application, a first step surface is formed between the second section and the first section, and the end cover overlaps the first step surface.

In the foregoing solution, the end cover overlaps the first step surface, which is convenient for positioning the end cover.

According to some embodiments of this application, the shell further includes a second wall, where the second wall is arranged adjacent to the first wall and connected to the end cover, and an area of the outer surface of the first wall is greater than an area of the outer surface of the second wall.

In the foregoing solution, the second wall is arranged adjacent to the first wall, and the same ends of the second wall and the first wall together form the opening. The area of the outer surface of the first wall is greater than the area of the outer surface of the second wall, and the dimension of the first wall in the second direction is greater than the dimension of the second wall in the second direction. The first wall may be a larger surface of the battery cell, and the first opening portion is thickened, which can reduce the risk of fatigue cracking of the shell near the welding zone between the shell and the end cover.

According to some embodiments of this application, the second wall includes a second opening portion and a second body sequentially distributed along the first direction, where the second body is farther away from the opening than the second opening portion, and a largest thickness of the second opening portion is greater than a thickness of the second body.

In the foregoing solution, the second opening portion is close to the opening, and the second opening portion is thickened, such that the strength of the second wall can be enhanced and the risk of cracking of the shell near the welding zone between the shell and the end cover due to thermal runaway or excessive gas production of the battery cell can be reduced.

According to some embodiments of this application, a dimension of the second wall in a third direction is denoted as b, satisfying 40 mm≤b, where the third direction, the second direction, and the first direction are perpendicular to each other.

In the foregoing solution, the dimension of the second wall in the third direction satisfies the foregoing relationship, which can improve the strength of the second wall, constrain the expansion and deformation of the second wall, and reduce the risk of cracking of the shell near the welding zone between the shell and the end cover, and the processing and manufacturing difficulty is low.

According to some embodiments of this application, the second opening portion includes a third section and a fourth section connected to each other, where the third section, the fourth section, and the second body are sequentially distributed along the first direction, a largest thickness of the fourth section is greater than the thickness of the second body, the largest thickness of the fourth section is greater than a largest thickness of the third section, a second step surface is formed between the fourth section and the third section, and the end cover overlaps the second step surface and is connected to the third section.

In the foregoing solution, the third section, the fourth section, and the second body are sequentially distributed along the first direction; the end cover is connected to the third section, such that the fourth section is adjacent to a junction between the end cover and the third section; and the largest thickness of the fourth section is greater than the largest thickness of the second body, and the largest thickness of the fourth section is greater than the largest thickness of the third section, such that the second opening portion has relatively high strength, which can reduce the risk of cracking of the shell near the welding zone between the shell and the end cover and improve the service life and reliability of the battery cell. The end cover overlaps the second step surface, which is convenient for positioning the end cover.

According to some embodiments of this application, the battery cell further includes an electrode assembly, where the electrode assembly is arranged in the housing, the electrode assembly includes a main zone, the main zone is provided with an active substance, the main zone has a first surface facing the end cover, the end cover has a second surface facing away from the inside of the battery cell, and along the thickness direction of the end cover, a distance between the first surface and the second surface is denoted as h, satisfying 0.3 mm²≤h×(t₁t₂)≤10 mm².

In the foregoing solution, the electrode assembly is arranged in the housing, and the distance between the first surface of the electrode assembly and the second surface of the shell and the difference between the largest thickness of the first opening portion and the thickness of the first body satisfy the foregoing relationships, such that the electrode assembly has a certain space from the opening in a case of high strength of the first opening portion, which reduces the interference between the electrode assembly and components in the shell. In addition, the electrode assembly has little influence on the welding zone between the shell and the end cover, the first opening portion occupies a relatively small space, and the space utilization of the shell is relatively high, such that the battery cell has relatively high energy density.

According to some embodiments of this application, 0.4 mm²≤h×(t₁-t₂)≤7.5 mm².

In the foregoing solution, as compared with 0.3 mm²≤h×(t₁-t₂), when 0.4 mm²≤h×(t₁-t₂), the first opening portion can have relatively high strength, and the electrode assembly can have a larger space from the opening, which further reduces the impact of the expansion of the electrode assembly on the welding zone between the shell and the end cover; and as compared with h×(t₁-t₂)≤10 mm², when h×(t₁-t₂)≤7.5 mm², the first opening portion occupies a relatively small space, and the space utilization of the shell is relatively high, such that the battery cell can have a relatively high energy density.

According to some embodiments of this application, 4.5 mm≤h≤20 mm.

In the foregoing solution, the distance between the first surface and the second surface satisfies the foregoing relationship, which can reduce the interference risk between the electrode assembly and components in the shell, and the space in the shell can be reasonably utilized, such that the battery cell can have a relatively high energy density

According to some embodiments of this application, 5 mm≤h≤15 mm.

In the foregoing solution, as compared with 4.5 mm≤h≤20 mm, when 5 mm≤h≤15 mm, the interference between the electrode assembly and components in the shell is reduced, and the space in the shell is reasonably utilized, such that the battery cell has a relatively high energy density.

According to some embodiments of this application, t₁ and t₂ satisfy at least one of the following conditions: (1) 0.1 mm≤t₁-t₂≤2 mm; (2) 0.5 mm≤t₁≤4 mm; and (3) 0.4 mm≤t₂≤2 mm.

In the foregoing solution, when t₁ and t₂ satisfy the foregoing conditions, the first opening portion has relatively high strength, and the first opening portion occupies a relatively small assembly space, such that the battery cell has a relatively high energy density.

According to some embodiments of this application, t₁ and t₂ satisfy at least one of the following conditions: (1) 0.2 mm≤t₁-t₂≤1 mm; (2) 0.7 mm≤t₁≤2 mm; and (3) 0.4 mm≤t₂≤1 mm.

In the foregoing solution, as compared with t₁ and t₂ satisfying (1) 0.1 mm≤t₁-t₂≤2 mm, (2) 0.5 mm≤t₁≤4 mm, and (3) 0.4 mm≤t₂≤2 mm, when t₁ and t₂ satisfy (1) 0.2 mm<t₁-t₂≤1 mm, (2) 0.7 mm≤t₁≤2 mm, and (3) 0.4 mm≤t₂≤1 mm, the processing and manufacturing difficulty is reduced, the strength of the first opening portion is improved, and the first opening portion occupies a relatively small assembly space, such that the battery cell has a relatively high energy density.

According to some embodiments of this application, the battery cell further includes an electrode assembly, where the electrode assembly includes a main zone, the main zone is provided with an active substance, the main zone has a first surface facing the end cover, and along the direction in which the first body points to the first opening portion, the first opening portion extends beyond the first surface.

In the foregoing solution, along the direction in which the first body points to the first opening portion, the first opening portion extends beyond the first surface, which can reduce the risk of interference between the first opening portion and the main body.

According to some embodiments of this application, the shell is welded to the end cover to form a welding zone, and an average grain size of a portion of the first opening portion except the welding zone is greater than an average grain size of the first body, where the average grain size is an average grain size of grains in the thickness direction of the first wall.

In the foregoing solution, the average grain size of the portion of the first opening portion except the welding zone is greater than the average grain size of the first body, which is beneficial to enhancing the strength of the first opening portion, making the first opening portion have relatively high strength, and reducing the risk of cracking of the shell near the welding zone between the shell and the end cover.

According to some embodiments of this application, in a cross section of the first wall parallel to the thickness direction of the first wall, the number of grains in a portion of the first opening portion located below the welding zone is greater than or equal to 15 in the width direction of the cross section.

In the foregoing solution, in the width direction of the cross section, the number of grains is greater than or equal to 15, which is beneficial to enhancing the strength of the first opening portion and making the first opening portion have relatively high strength.

According to some embodiments of this application, the average grain size of the portion of the first opening portion except the welding zone is in a range of 70 µm to 1200 µm; and/or the average grain size of the first body is in a range of 30 µm to 1000 µm.

In the foregoing solution, the average grain size of the first opening portion and/or the average grain size of the first body satisfy the foregoing relationship, which is beneficial to enhancing the strength of the first opening portion and making the first opening portion have relatively high strength.

According to a second aspect, an embodiment of this application provides a battery, where the battery includes the battery cell according to any one of the foregoing embodiments.

According to some embodiments of this application, the battery cell is provided in plurality, the plurality of battery cells are stacked in a third direction, and the battery further includes an end plate, where along the third direction, the end plate is arranged at an end of the plurality of battery cells, the third direction, the second direction, and the first direction are perpendicular to each other, and along a direction in which the first body points to the first opening portion, at least part of the first opening portion extends beyond the end plate.

In the foregoing solution, the end plate is arranged at the end of the plurality of battery cells in the third direction, and the end plate has a relatively large connection area with the shell of the adjacent battery cell to form constraints on the shell, reducing the risk of cracking of the shell near the welding zone between the shell and the end cover.

According to some embodiments of this application, the end plate is arranged facing the first wall.

In the foregoing solution, the end plate faces the first wall, and the end plate has a relatively large contact area with the first body, such that the end plate can constrain the first wall during the charge and discharge cycling of the battery cell, so as to reduce the risk of cracking of the shell near the welding zone between the shell and the end cover.

According to a third aspect, an embodiment of this application provides an electric device, where the electric device includes the battery cell or the battery according to any one of the foregoing embodiments.

According to a fourth aspect, an embodiment of this application provides an energy storage apparatus, where the energy storage apparatus includes the battery cell or the battery according to any one of the foregoing embodiments.

For additional aspects and advantages of this application, some will be given in the following description, and some will become apparent in the following description or will be understood in the practice of this application.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic assembly diagram of a shell and an electrode assembly according to some embodiments of this application;
FIG. 5 is a cross-sectional view taken along line A-A of FIG. 4;
FIG. 6 is a locally enlarged view of position B in FIG. 5;
FIG. 7 is a locally schematic assembly diagram of a shell and an electrode assembly according to some embodiments of this application;
FIG. 8 is a cross-sectional view taken along line C-C of FIG. 4;
FIG. 9 is a locally enlarged view of position D in FIG. 8;
FIG. 10 is a cross-sectional view of a partial structure of an end cover and a shell after assembly according to some embodiments of this application;
FIG. 11 is a schematic assembly diagram of an end plate and a plurality of battery cells according to some embodiments of this application;
FIG. 12 is a schematic assembly diagram of an end plate and a battery cell according to an embodiment of this application; and
FIG. 13 is a locally enlarged view of position E in FIG. 12.

The accompanying drawings are not drawn to scale.

Reference signs are described as follows: 100: battery; 10: box; 11: first sub-box; 12: second sub-box; 20: battery cell; 21: housing; 211: shell; 212: end cover; 2121: second surface; 213: first wall; 2131: first opening portion; 2131a: first section; 2131b: second section; 2132: first body; 2133: first step surface; 2130: groove; 214: second wall; 2141: second opening portion; 2141a: third section; 2141b: fourth section; 2142: second body; 2143: second step surface; 215: bottom wall; 210: welding zone; 22: electrode assembly; 22a: first surface; 221: main body; 222: tab; 23: electrode terminal; 24: adapter; 30: end plate; 200: controller; 300: motor; 1000: vehicle; F1: first dividing line; F2: second dividing line; X: first direction; Y: second direction; and Z: third direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. A person of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, "a plurality of" means more than two (inclusive). Similarly, "a plurality of groups" means more than two (inclusive) groups, and "a plurality of pieces" means more than two (inclusive) pieces.

In some embodiments, the battery can be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage electric cabinet, and the like.

In the embodiments of this application, the battery cell may be a secondary battery, and the secondary battery refers to a battery cell that can be recharged to activate active materials and continue to be used, after the battery cells are discharged.

The battery cell may be, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent short circuit of the positive electrode and negative electrode and to allow the active ions to pass through.

In some embodiments, the positive electrode may be a positive electrode plate, and the positive electrode plate may include a positive electrode current collector and a positive electrode active material arranged on at least one surface of the positive electrode current collector.

In an example, the positive electrode current collector includes two back-to-back surfaces in a thickness direction of the positive electrode current collector, and the positive electrode active material is arranged on either or both of the two back-to-back surfaces of the positive electrode current collector.

In an example, the positive electrode current collector may be a metal foil current collector or a composite current collector. For example, as the metal foil, the positive electrode current collector may use aluminum with a silver-plated surface, stainless steel with a silver-plated surface, stainless steel, copper, aluminum, nickel, baked carbon, carbon, nickel, or titanium. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

For example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries.

In some embodiments, the negative electrode may be a negative electrode plate, and the negative electrode plate may include a negative electrode current collector.

In an example, the negative electrode current collector may be a metal foil current collector or a composite current collector. For example, as the metal foil, the negative electrode current collector may use aluminum with a silver-plated surface, stainless steel with a silver-plated surface, stainless steel, copper, aluminum, nickel, baked carbon, carbon, nickel, or titanium.

In some embodiments, the negative electrode current collector includes two back-to-back surfaces in its thickness direction, and the negative electrode active material is disposed on either or both of the two back-to-back surfaces of the negative electrode current collector.

In an example, the negative electrode active material may be a negative electrode active material for batteries well-known in the art. In an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, and may alternatively use other conventional well-known materials that can be used as negative electrode active materials for batteries. One of these negative electrode active materials may be used alone, or two or more of them may be used in combination.

In some embodiments, the separator is an isolating film. The isolating film is not limited to any particular type in this application, and may be any well-known porous isolating film with good chemical stability and mechanical stability.

In an example, major materials of the isolating film may be selected from at least one of glass fiber, non-woven fabric, polyethylene, polypropylene, polyvinylidene fluoride, or ceramics. The isolating film may be a single-layer film or a multi-layer composite film, and is not particularly limited. When the isolating film is a multi-layer composite film, all layers may be made of same or different materials, which is not particularly limited. The isolating film may be an independent component located between the positive electrode and the negative electrode, or may be attached to surfaces of the positive electrode and the negative electrode.

In some embodiments, the separator is a solid electrolyte. The solid electrolyte is arranged between the positive electrode and the negative electrode, and plays the roles of transporting ions and isolating the positive electrode and the negative electrode.

In some embodiments, the electrode assembly is a wound structure. The positive electrode plate and the negative electrode plate are wound into a wound structure.

In some embodiments, the electrode assembly is a laminated structure.

In some embodiments, the battery cell may include a housing. The housing is configured to encapsulate the electrode assembly, the electrolyte, and other components. The housing may be steel housing, aluminum housing, plastic housing (for example, polypropylene), composite metal housing (for example, copper-aluminum composite housing), aluminum-plastic film, or the like.

In some embodiments, the housing includes an end cover and a shell, where the shell is provided with an opening, and the end cover closes the opening to form a closed space for accommodating the electrode assembly and substances such as the electrolyte. The shell may be provided with one or more openings. The end cover may also be provided in one or more.

In some embodiments, at least one electrode terminal is provided on the housing, and the electrode terminal is electrically connected to a tab of the electrode assembly. The electrode terminal may be directly connected to the tab or indirectly connected to the tab through an adapter. The electrode terminal may be provided on the end cover or may be provided on the shell.

In some embodiments, an explosion-proof valve is provided on the housing. The explosion-proof valve is configured to release the pressure inside the battery cell.

In an example, the battery cell may be a prismatic battery cell or other shaped battery cells. The prismatic battery cell includes a square shell battery cell, a blade battery cell, and a polygonal battery, such as a hexagonal battery.

For the development of battery technologies, many design factors need to be considered, for example, performance parameters such as energy density, discharge capacity, and charge and discharge rate, as well as reliability of the battery.

In some embodiments, the battery cell includes a housing, where the housing includes a shell and an end cover, the shell has an opening, and the end cover is connected to the shell and closes the opening. The end cover is typically welded to the shell to form a welding mark. However, the high temperature during welding between the end cover and the shell easily reduces the strength of parts of the end cover and the shell near the welding position. During the charge and discharge cycling of the battery cell, the shell expands and contracts, which easily leads to fatigue cracking of the shell near the welding zone between the shell and the end cover, leading to damage to the shell, and reducing the service life and reliability of the battery cell.

In view of this, an embodiment of this application provides a technical solution. The battery cell includes a housing. The housing includes a shell and an end cover, where the shell includes a first wall, the first wall includes a first opening portion and a first body sequentially distributed along a first direction, the first direction is parallel to a thickness direction of the end cover, the first body is farther away from the opening than the first opening portion, a thickness of the first opening portion is greater than a thickness of the first body, and the end cover is connected to the first wall and closes the opening. A largest thickness of the first opening portion is denoted as t₁, the thickness of the first body is denoted as t₂, and a dimension of the first wall in a second direction is denoted as a, satisfying 120≤a/(t₁-t₂)≤4000, where the second direction, a thickness direction of the first wall, and the first direction are perpendicular to each other. This can reduce the risk of fatigue cracking of the shell and make the battery cell have relatively high reliability.

In such battery cell of this embodiment of this application, a larger dimension of the first wall in the second direction indicates a greater need to increase the strength of the first opening portion. The dimension of the first wall in the second direction and a difference between the largest thickness of the first opening portion and the thickness of the first body satisfy the foregoing relationship, facilitating processing and manufacturing of the first opening portion, and the first opening portion can have relatively high strength, which can reduce the risk of fatigue cracking of the shell near the welding zone between the shell and the end cover and improve the reliability of the battery cell. In addition, the first opening portion occupies a relatively small assembly space, such that the battery cell can have a relatively high energy density.

The battery disclosed in the embodiments of this application may be used without limitation in electric devices such as vehicles, ships, or aircrafts. The battery disclosed in this application may be used to constitute a power supply system of that electric device.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

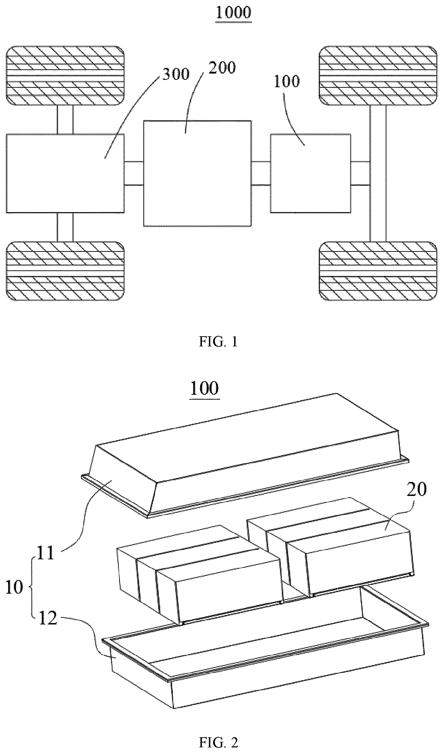

Referring to FIG. 1, FIG. 1 is a schematic structural diagram of a vehicle according to some embodiments of this application. The vehicle 1000 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first sub-box 11 and a second sub-box 12. The first sub-box 11 and the second sub-box 12 fit together to jointly define an accommodating space for accommodating the battery cell 20. The second sub-box 12 may be a hollow structure with an opening at one end, the first sub-box 11 may be a plate structure, and the first sub-box 11 covers an opening side of the second sub-box 12, such that the first sub-box 11 and the second sub-box 12 jointly define an accommodating space. The first sub-box 11 and the second sub-box 12 may both be a hollow structure with an opening on one side, and the opening side of the first sub-box 11 covers the opening side of the second sub-box 12.

In the battery 100, the battery cells 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

The battery cell 20 may be a secondary battery or a primary battery, or may be a lithium-sulfur battery, a sodium-ion battery, or a magnesium-ion battery, but is not limited thereto.

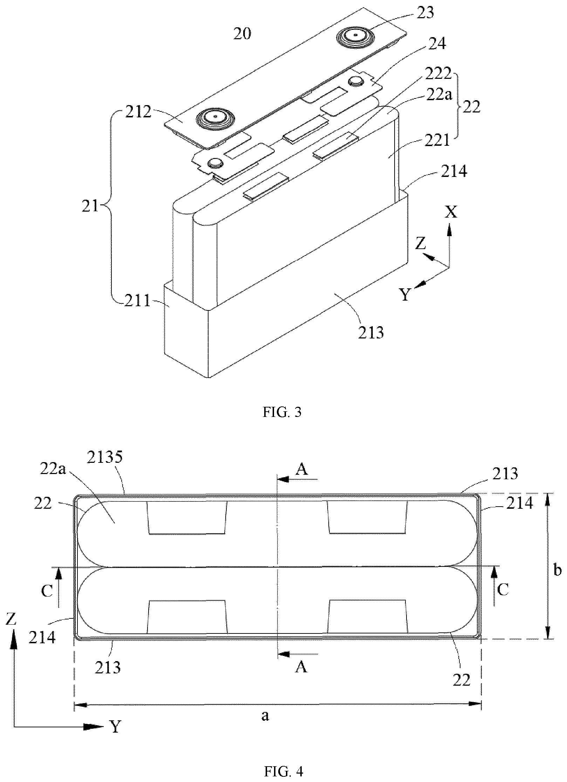

Referring to FIG. 3, FIG. 3 is an exploded view of a battery cell according to some embodiments of this application. As shown in FIG. 3, the battery cell 20 includes a housing 21, an electrode assembly 22 and other functional components. The housing 21 includes a shell 211 and an end cover 212, where the shell 211 has an opening, and the end cover 212 closes the opening to separate the internal environment of the battery cell 20 from the external environment.

The shell 211 is an assembly configured to cooperate with the end cover 212 to form an internal environment of the battery cell 20, where the formed internal environment can be used to accommodate the electrode assembly 22, an electrolyte, and other components. The shell 211 and the end cover 212 may be independent components. The shell 211 may be of various shapes and sizes. Specifically, a shape of the shell 211 may be determined according to a specific shape and size of the electrode assembly 22. The shell 211 can be made of various materials, such as copper, iron, aluminum, stainless steel, aluminum alloy (for example, ternary aluminum), and plastic.

The end cover 212 refers to a component that covers the opening of the shell 211 to separate the internal environment of the battery cell 20 from the external environment. A shape of the end cover 212 is not limited and may be adapted to a shape of the shell 211 to fit the shell 211. Optionally, the end cover 212 may be made of a material (for example, aluminum alloy) with specified hardness and strength, such that the end cover 212 is less likely to deform under extrusion and collision, allowing the battery cell 20 to have a higher structural strength and improved reliability. The end cover 212 may be provided with functional components such as an electrode terminal 23. The electrode terminal 23 may be configured to be electrically connected to the electrode assembly 22 for outputting or inputting electric energy of the battery cell 20. The end cover 212 may also be made of various materials, such as copper, iron, aluminum, stainless steel, aluminum alloy, and plastic, which are not particularly limited in the embodiments of this application. In some embodiments, an insulating structure may also be provided inside the end cover 212, and the insulating structure may be configured to isolate an electrical connection component in the shell 211 from the end cover 212 so as to reduce risks of short circuit. Illustratively, the insulating structure may be plastic, rubber, or the like.

The electrode assembly 22 is a component of the battery cell 20 in which electrochemical reactions occur. The shell 211 may include one or more electrode assemblies 22. The electrode assembly 22 is mainly formed by winding or stacking a positive electrode plate and a negative electrode plate, and an isolating film is typically arranged between the positive electrode plate and the negative electrode plate. The isolating film is configured to separate the positive electrode plate and the negative electrode plate, so as to avoid internal short circuit between the positive electrode plate and the negative electrode plate. Parts of the positive electrode plate and the negative electrode plate that contain active substances constitute a main body of the electrode assembly, while parts of the positive electrode plate and the negative electrode plate that contain no active substance separately constitute a tab. A positive electrode tab and a negative electrode tab may both be located at one end of the main body or be located at two ends of the main body respectively.

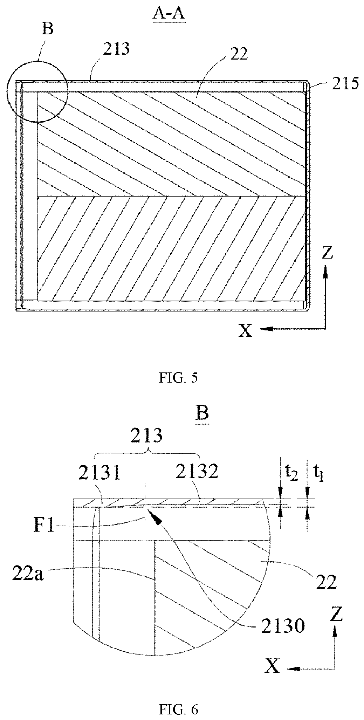

Referring to FIG. 3, and further referring to FIG. 4 to FIG. 6, FIG. 4 is a schematic assembly diagram of a shell and an electrode assembly according to some embodiments of this application, and FIG. 4 is a schematic diagram of an assembly state of an electrode assembly and a shell before assembly of the shell and the end cover; FIG. 5 is a cross-sectional view taken along line A-A of FIG. 4; and FIG. 6 is a locally enlarged view of position B in FIG. 5.

An embodiment of this application provides a battery cell 20, where the battery cell 20 includes a housing 21. The housing 21 includes a shell 211 and an end cover 212. The shell 211 has an opening, and the shell 211 includes a first wall 213. The first wall 213 includes a first opening portion 2131 and a first body 2132 sequentially distributed along a first direction X, where the first direction X is parallel to a thickness direction of the end cover 212. The first body 2132 is farther away from the opening than the first opening portion 2131, and a thickness of the first opening portion 2131 is greater than a thickness of the first body 2132. The end cover 212 is connected to the first opening portion 2131 and closes the opening. A largest thickness of the first opening portion 2131 is denoted as t₁, the thickness of the first body 2132 is denoted as t₂, and a dimension of the first wall 213 in a second direction Y is denoted as a, satisfying 120≤a/(t₁t₂)≤6000, where the second direction Y, a thickness direction of the first wall 213, and the first direction X are perpendicular to each other.

In the figure, the direction indicated by letter X is the first direction, and the first direction X is parallel to the thickness direction of the end cover 212. The direction indicated by letter Y is the second direction, and the second direction Y may be parallel to a length direction of the battery cell 20 or parallel to a width direction of the battery cell 20.

In the first direction X, the first body 2132 is farther away from the opening than the first opening portion 2131, and the first opening portion 2131 can enclose an opening.

In some embodiments, the end cover 212 may be welded to the first wall 213 to form a first welding zone, and part of the first opening portion 2131 may be welded to the end cover 212 to form a first welding zone. In some embodiments, the first welding zone may be referred to as a welding mark.

In some embodiments, the first body 2132 may have an equal thickness structure, and the thickness of the first body 2132 may be the largest thickness of the first body 2132. The first opening portion 2131 may have an equal thickness structure or a variable thickness structure. When the first opening portion 2131 is an equal thickness structure, the largest thickness of the first opening portion 2131 is a thickness of any position of the first opening portion 2131; and when the first opening portion 2131 is a variable thickness structure, the largest thickness of the first opening portion 2131 may be a thickness of a position of the first opening portion 2131 with a largest thickness.

Alternatively, when the first opening portion 2131 is a variable thickness structure, the thickness of the first opening portion 2131 may gradually decrease from an end far away from the first body 2132 to an end close to the first body 2132, and a zone of the first opening portion 2131 with a largest thickness is located at the end far away from the first body 2132.

A larger dimension of the first wall 213 in the second direction Y indicates that the first wall 213 is easier to expand and deform during the charge and discharge of the battery cell 20. Therefore, the strength of the first opening portion 2131 needs to be increased so as to reduce the risk of fatigue cracking of the first opening portion 2131.

A smaller difference between the largest thickness of the first opening portion 2131 and the thickness of the first body 2132 indicates more difficulty in processing the first opening portion 2131. A greater difference between the largest thickness of the first opening portion 2131 and the thickness of the first body 2132 indicates a larger assembly space occupied by the first opening portion 2131, which affects the energy density of the battery cell 20.

For the battery cell 20 according to this embodiment of this application, the dimension a of the first wall 213 in the second direction Y and the difference (t₁-t₂) between the largest thickness of the first opening portion 2131 and the thickness of the first body 2132 satisfy the foregoing relationship (120≤a/(t₁-t₂)≤4000), facilitating processing and manufacturing, such that the first opening portion 2131 can have relatively high strength, which can reduce the risk of cracking of the shell 211 near the welding zone between the shell 211 and the end cover 212 and improve the reliability of the battery cell 20. In addition, the first opening portion 2131 occupies a relatively small assembly space, such that the battery cell 20 can have a relatively high energy density.

a/(t₁-t₂) may be any value between 120 and 4000. Optionally, a/(t₁-t₂) may be, but is not limited to, 120, 160, 200, 300, 400, 500, 600, 700, 800, 900, 1000, 1100, 1200, 1300, 1400, 1500, 1600, 1700, 1800, 1900, 2000, 2500, 3000, 3500, 4000, 4500, 5000, 5500, and 6000.

In some embodiments, along the thickness direction of the first wall 213, the first body 2132 has a first face facing the inside of the battery cell 20, where part of the first opening portion 2131 may protrude from the first face.

In some embodiments, along the thickness direction of the first wall 213, the first body 2132 has a second face facing away from the inside of the battery cell 20, where part of the first opening portion 2131 may protrude from the second face.

In some embodiments, along the thickness direction of the first wall 213, the first body 2132 has a first face facing the inside of the battery cell 20 and a second face facing away from the inside of the battery cell 20, where part of the first opening portion 2131 may protrude from the first face and part of the first opening portion 2131 may protrude from the second face.

In some embodiments, the first opening portion 2131 may be separately provided or integrally formed. For example, in the manufacturing process of the shell 211, at the opening of the first wall 213, a thickened portion is separated from a base of the first wall 213, the thickened portion is fixedly connected to the base to form the first opening portion 2131, and the base forms the first body 2132 in a zone of the first wall 213 located in the first body 2132. For another example, in the manufacturing process of the shell 211, the shell 211 can be formed by stamping, the shell 211 is an integrated structure, the first opening portion 2131 is formed at the opening of the first wall 213, and a largest thickness of the first opening portion 2131 is greater than a thickness of the first body 2132.

A dotted line indicated by letter F1 in FIG. 6 may be a dividing line between the first opening portion 2131 and the first body 2132, and the dividing line may be a first dividing line F1 for convenience of distinction.

In some embodiments, due to the thickness difference between the first opening portion 2131 and the first body 2132, when part of the first opening portion 2131 protrudes from the first face, a groove 2130 is formed between the first opening portion 2131 and the first face of the first body 2132, and the main body 221 of the electrode assembly 22 may or may not be located in the groove 2130. It should be noted that the groove 2130 is a recessed zone formed by a height difference between the first opening portion 2131 and the first body 2132.

According to some embodiments of this application, 400≤a/(t₁-t₂)≤S3000, and optionally, 500≤a/(t₁-t₂)≤2000.

As compared with 120≤a/(t₁-t₂)≤6000, when 400≤a/(t₁-t₂)≤3000 or 500≤a/(t₁-t₂)≤2000, the processing and manufacturing difficulty of the first opening portion 2131 is low, the first opening portion 2131 can have relatively high strength, and the battery cell 20 can have a relatively high energy density.

Optionally, a/(t₁-t₂) may be, but is not limited to, 400, 450, 500, 550, 600, 650, 700, 750, 800, 850, 900, 950, 1000, 1100, 1200, 1300, 1400, 1500, 1600, 1700, 1800, 1900, 2000, 2500, and 3000.

According to some embodiments of this application, 70 mm≤a≤600 mm.

a may be any value between 70 mm and 600 mm. Alternatively, a may be, but is not limited to, 70 mm, 90 mm, 140 mm, 180 mm, 280 mm, 360 mm, 420 mm, 450 mm, 490 mm, 540 mm, and 600 mm.

In the foregoing solution, the dimension a of the first wall 213 in the second direction Y satisfies the foregoing relationship, such that the battery cell 20 has a relatively large dimension in the second direction Y, making the battery cell 20 have a relatively high energy density.

According to some embodiments of this application, 100 mm≤a≤500 mm.

In the foregoing solution, as compared with 70 mm≤a≤600 mm, when 100 mm≤a≤500 mm, the battery cell 20 can have a relatively high energy density, with ease of processing and manufacturing.

Alternatively, a may be, but is not limited to, 100 mm, 150 mm, 200 mm, 250 mm, 300 mm, 350 mm, 400 mm, 450 mm, 500 mm.

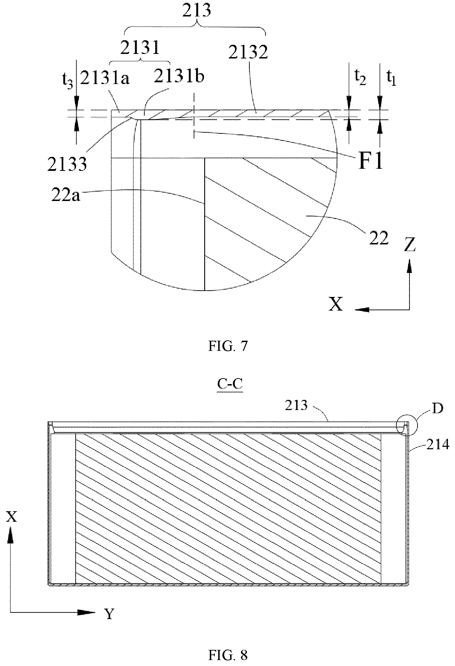

Referring to FIG. 7, FIG. 7 is a locally schematic assembly diagram of a shell and an electrode assembly according to some embodiments of this application, and FIG. 7 is a schematic structural diagram of a first wall of the shell before assembly of the shell and the end cover. According to some embodiments of this application, the first opening portion 2131 includes a first section 2131a and a second section 2131b connected to each other, where the first section 2131a, the second section 2131b, and the first body 2132 are sequentially distributed along the first direction X, a largest thickness of the second section 2131b is greater than the thickness of the first body 2132, the largest thickness of the second section 2131b is greater than a largest thickness of the first section 2131a, and the end cover 212 (refer to FIG. 3) is connected to the first section 2131a.

The first section 2131a, the first section 2131a, and the first body 2132 are sequentially distributed along the first direction X. The first section 2131a is closer to the opening than the second section 2131b, and the first section 2131a is configured to be connected to the end cover 212.

The largest thickness of the first section 2131a may be t₃, and the largest thickness of the second section 2131b may be t₁, satisfying t₁>t₃. To be specific, the largest thickness of the second section 2131b is greater than the largest thickness of the first section 2131a, such that the first opening portion 2131 has relatively high strength after the end cover 212 is connected to the first section 2131a.

In some embodiments, 0.1 mm≤t₁-t₃≤0.2 mm.

In some embodiments, 0.4 mm≤t₃≤3.9 mm.

Alternatively, t₃ may be, but is not limited to, 0.4 mm, 0.6 mm, 0.8 mm, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, and 3.9 mm.

The second section 2131b is arranged adjacent to the first section 2131a, and at least part of the second section 2131b is a heat-affected zone after the end cover 212 is welded with the first section 2131a.

In the foregoing solution, the first section 2131a, the second section 2131b, and the first body 2132 are sequentially distributed along the first direction X; the end cover 212 is connected to the first section 2131a, such that the second section 2131b is adjacent to a junction between the end cover 212 and the first section 2131a; the largest thickness of the second section 2131b is greater than the largest thickness of the first body 2132, and the largest thickness of the second section 2131b is greater than the largest thickness of the first section 2131a, such that the first opening portion 2131 has relatively high strength, which can reduce the risk of fatigue cracking of the shell 211 near the welding zone between the shell 211 and the end cover 212 and improve the service life and reliability of the battery cell 20.

In some embodiments, before the first section 2131a is connected to the end cover 212, the largest thickness of the shell 211 in a zone where the first section 2131a is located may be greater than the thickness of the first body 2132. To be specific, in the manufacturing process of the battery cell 20, the shell 211 in the zone where the first section 2131a is located may also be thickened relative to the first body 2132, so as to improve the firmness of connection between the end cover 212 and the first section 2131a.

In some embodiments, before the first section 2131a is connected to the end cover 212, the largest thickness of the shell 211 in the zone where the first section 2131a is located may be the same as the largest thickness of the second section 2131b, that is, the first opening portion 2131 may also be an equal thickness structure. After the first opening portion 2131 is welded with the end cover 212, part of the shell 211 in the zone where the first section 2131a is located is welded to part of the end cover 212 to form a first welding zone, and the remaining part of the shell 211 is called the first section 2131a.

According to some embodiments of this application, a first step surface 2133 is formed between the second section 2131b and the first section 2131a, and the end cover 212 overlaps the first step surface 2133.

Before the first section 2131a is connected to the end cover 212, the largest thickness of the shell 211 in the zone where the first section 2131a is located is less than the largest thickness of the second section 2131b, the first step surface 2133 is formed between the second section 2131b and the first section 2131a, and the end cover 212 overlaps the first step surface 2133, which is convenient for positioning the end cover 212.

Referring to FIG. 3 and FIG. 4, according to some embodiments of this application, the shell 211 further includes a second wall 214, where the second wall 214 is arranged adjacent to the first wall 213 and connected to the end cover 212, and an area of the outer surface of the first wall 213 is greater than an area of the outer surface of the second wall 214.

The second wall 214 is adjacent to the first wall 213, the second wall 214 is adjacent to the end cover 212, and the second wall 214 and the first wall 213 together enclose an opening.

In some embodiments, the first wall 213 may be provided in two, and the two first walls 213 are oppositely arranged along a third direction Z. The second walls 214 may be provided in two, and the two second walls 214 are oppositely arranged along the second direction Y. The two second walls 214 and the two first walls 213 enclose an accommodating cavity with an opening, and the electrode assembly is accommodated in the accommodating cavity.

The area of the outer surface of the first wall 213 is greater than the area of the outer surface of the second wall 214. The first wall 213 may be a wall with a larger area of the shell 211. For example, the area of the outer surface of the first wall 213 may be greater than an area of an outer surface of the end cover 212, and the first wall 213 may be a large surface of the battery cell 20. During the charge and discharge cycling of the battery cell 20, the first wall 213 is subjected to a large force, and the first opening portion 2131 of the first wall 213 is thickened, which can improve the strength of the first opening portion 2131 and reduce the risk of fatigue cracking of the shell 211 near the welding zone between the shell 211 and the end cover 212.

Referring to FIG. 8, FIG. 8 is a cross-sectional view taken along line C-C of FIG. 4. According to some embodiments of this application, the second wall 214 includes a second opening portion 2141 and a second body 2142 sequentially distributed along the first direction X, where the second body 2142 is farther away from the opening than the second opening portion 2141, and a largest thickness of the second opening portion 2141 is greater than a thickness of the second body 2142.

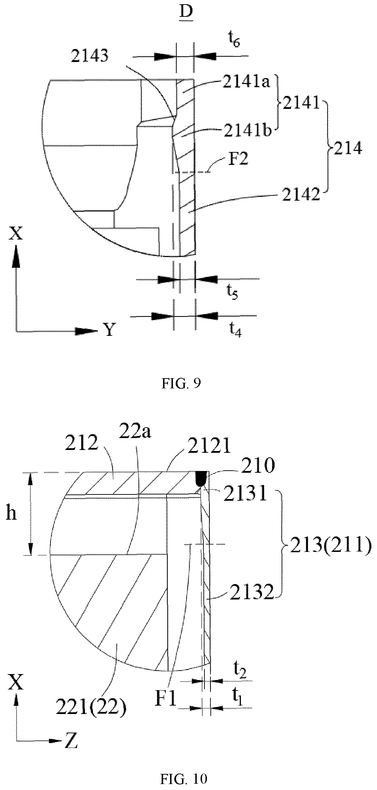

The dotted line indicated by letter F2 in FIG. 9 may be the dividing line between the second opening portion 2141 and the second body 2142, and the dividing line may be a second dividing line F2 for convenience of distinction.

In the first direction X, the second body 2142 is farther away from the opening than the second opening portion 2141, and the second opening portion 2141 can enclose an opening. In the figure, the largest thickness of the second opening portion 2141 is t₄, and the thickness of the second body is t₅, satisfying t₄>t₅.

In some embodiments, part of the second opening portion 2141 may be welded to the end cover 212 to form a second welding zone. In some embodiments, the second welding zone may be referred to as a welding mark.

In some embodiments, the second body 2142 may have an equal thickness structure, and the thickness of the second body 2142 may be the largest thickness of the second body 2142. The second opening portion 2141 may have an equal thickness structure or a variable thickness structure. When the second opening portion 2141 is an equal thickness structure, the largest thickness of the second opening portion 2141 is a thickness of any position of the second opening portion 2141; and when the second opening portion 2141 is a variable thickness structure, the largest thickness of the second opening portion 2141 may be a thickness of a position corresponding to a largest thickness of the second opening portion 2141.

Alternatively, when the second opening portion 2141 is a variable thickness structure, the thickness of the second opening portion 2141 may gradually decrease from an end far away from the second body 2142 to an end close to the second body 2142, and a zone with a largest thickness of the second opening portion 2141 is located at the end far away from the second body 2142.

In the foregoing solution, the second opening portion 2141 is close to the opening, and the second opening portion 2141 is thickened, such that the strength of the second wall 214 can be enhanced and the risk of cracking of the shell 211 near the welding zone between the shell 211 and the end cover 212 due to the thermal runaway or excessive gas production of the battery cell 20 can be reduced.

Referring to FIG. 4, according to some embodiments of this application, a dimension of the second wall 214 in a third direction Z is denoted as b, satisfying 40 mm≤b, where the third direction Z, the second direction Y, and the first direction X are perpendicular to each other.

When a dimension of the second wall 214 in the third direction Z is relatively small, the second wall 214 is not easy to crack during the charge and discharge of the battery cell 20. When the dimension of the second wall 214 in the third direction Z is relatively large, the processing and manufacture difficulty in the shell 211 is relatively high because both the second opening portion 2141 and the first opening portion 2131 need to be thickened.

In the foregoing solution, the dimension of the second wall 214 in the third direction Z satisfies the foregoing relationship, which can improve the strength of the second wall 214, constrain the expansion and deformation of the second wall 214, and reduce the risk of cracking of the shell 211 near the welding zone between the shell 211 and the end cover 212, and the processing and manufacturing difficulty is low.

Optionally, 40 mm≤b≤120 mm.

Alternatively, b may be any value between 40 mm and 120 mm. Alternatively, b may be, but is not limited to, 40 mm, 48 mm, 54 mm, 60 mm, 66 mm, 72 mm, 78 mm, 84 mm, 92 mm, 104 mm, 110 mm, and 120 mm.

In some embodiments, in a view along the thickness direction of the end cover 212, the second opening portion 2141 may partially overlap the electrode assembly 22, or the second opening portion 2141 may not overlap the electrode assembly 22.

Referring to FIG. 8, and further referring to FIG. 9, FIG. 9 is a locally enlarged view of position D of FIG. 8. According to some embodiments of this application, the second opening portion 2141 includes a third section 2141a and a fourth section 2141b connected to each other, where the third section 2141a, the fourth section 2141b, and the second body 2142 are sequentially distributed along the first direction X, a largest thickness of the fourth section 2141b is greater than the thickness of the second body 2142, the largest thickness of the fourth section 2141b is greater than a largest thickness of the third section 2141a, a second step surface 2143 is formed between the fourth section 2141b and the third section 2141a, and the end cover 212 (refer to FIG. 3) overlaps the second step surface 2143 and is connected to the third section 2141a.

The third section 2141a, the fourth section 2141a, and the second body 2142 are sequentially distributed along the first direction X. The third section 2141a is closer to the opening than the fourth section 2141b, and the third section 2141a is configured to be connected to the end cover 212.

The largest thickness of the third section 2141a may be t₆, and the largest thickness of the fourth section 2141b may be t₄, satisfying t₄>t₆. To be specific, the largest thickness of the fourth section 2141b is greater than the largest thickness of the third section 2141a, such that the second opening portion 2141 has relatively high strength after the end cover 212 is connected to the third section 2141a.

As the second wall 214 is a side surface of the battery cell 20, in the manufacturing process of the battery cell 20, the shell 211 is usually thinned in the third section 2141a, such that the largest thickness of this zone is smaller than that of the second body 2142, which is convenient for welding the second wall 214 and the end cover 212. In some embodiments of this application, before the third section 2141a is connected to the end cover 212, a zone of the shell 211 located in the third section 2141a can be thickened, such that a largest thickness of the zone of the shell 211 located in the third section 2141a can be greater than or equal to the thickness of the second body 2142, so as to improve the firmness of connection between the end cover 212 and the third section 2141a. In some other embodiments of this application, before the third section 2141a is connected to the end cover 212, a zone of the shell 211 located in the third section 2141a can be thickened, such that a largest thickness of the zone of the shell 211 located in the third section 2141a can be less than the thickness of the second body 2142, so as to improve the firmness of connection between the end cover 212 and the third section 2141a.

The fourth section 2141b is arranged adjacent to the third section 2141a, and at least part of the fourth section 2141b is a heat-affected zone after the end cover 212 is welded with the third section 2141a.

In the manufacturing process of the battery cell 20, because the second step surface 2143 is formed between the fourth section 2141b and the third section 2141a, the end cover 212 can overlap the second step surface 2143, so as to realize the positioning of the end cover 212.

In the foregoing solution, the third section 2141a, the fourth section 2141b, and the second body 2142 are sequentially distributed along the first direction X; the end cover 212 is connected to the third section 2141a, such that the fourth section 2141b is adjacent to a junction between the end cover 212 and the third section 2141a; and the largest thickness of the fourth section 2141b is greater than the largest thickness of the second body 2142, and the largest thickness of the fourth section 2141b is greater than the largest thickness of the third section 2141a, such that the second opening portion 2141 has relatively high strength, which can reduce the risk of cracking of the shell 211 near the welding zone between the shell 211 and the end cover 212 due to thermal runaway or excessive gas production of the battery cell 20 and improve the service life and reliability of the battery cell 20.

Referring to FIG. 3 and FIG. 5, according to some embodiments of this application, the shell 211 further includes a bottom wall 215. The first wall 213 and the second wall 214 each are provided in two. The two first walls 213 are oppositely arranged along the third direction Z, and the two second walls 214 are oppositely arranged along the second direction Y. The two first walls 213 and two second walls 214 surround the bottom wall 215. The two first walls 213 and the two second walls 214 are integrally formed with the bottom wall 215. The bottom wall 215 and the end cover 212 are arranged oppositely in the first direction X.

Refer to FIG. 3, and further refer to FIG. 10, FIG. 10 is a cross-sectional view of a partial structure of an end cover and a shell after assembly according to some embodiments of this application. According to some embodiments of this application, the battery cell 20 further includes an electrode assembly 22, where the electrode assembly 22 is arranged in the housing 21, the electrode assembly 22 includes a main body 221, the main body 221 has a first surface 22a facing the end cover 212, the end cover 212 has a second surface 2121 facing away from the inside of the battery cell 20, and along the thickness direction of the end cover 212, a distance between the first surface 22a and the second surface 2121 is denoted as h, satisfying 0.3 mm²≤h×(t₁t₂)≤10 mm².

In some embodiments, the electrode assembly 22 further includes a tab 222 extending from the main body 221, where the tab 222 may extend from the first surface 22a.

The second surface 2121 may be an outer surface of the end cover 212.

In the foregoing solution, the electrode assembly 22 is arranged in the housing 21, and the distance between the first surface 22a of the electrode assembly 22 and the second surface 2121 of the shell 211 and the difference between the largest thickness of the first opening portion 2131 and the thickness of the first body 2132 satisfy the foregoing relationships, such that the electrode assembly 22 has a certain space from the opening in a case of high strength of the first opening portion 2131, which reduces the interference between the electrode assembly 22 and components in the shell 211. In addition, the electrode assembly 22 has little influence on the welding zone between the shell 211 and the end cover 212, and the first opening portion 2131 occupies a relatively small space, such that the shell 211 has relatively high space utilization inside and the battery cell 20 has relatively high energy density.

h×(t₁-t₂) may be any value between 0.3 mm² and 10 mm². Alternatively, h×(t₁-t₂) may be, but is not limited to, 0.3 mm², 0.5 mm², 0.8 mm², 1 mm², 1.5 mm², 2 mm², 2.5 mm², 3 mm², 3.5 mm², 4 mm², 4.5 mm², 5 mm², 5.5 mm², 6 mm², 6.5 mm², 7 mm², 7.5 mm², 8 mm², 8.5 mm², 9 mm², 9.5 mm², and 10 mm².

According to some embodiments of this application, 0.4 mm²≤h×(t₁-t₂)≤7.5 mm².

Alternatively, h/(t₁-t₂) may be, but is not limited to, 0.4 mm², 0.8 mm², 1 mm², 1.5 mm², 2.5 mm², 3 mm², 3.5 mm², 4 mm², 4.5 mm², 5 mm², 5.5 mm², 6 mm², 6.5 mm², 7 mm², and 7.5 mm².

In the foregoing solution, as compared with 0.3 mm²≤h×(t₁-t₂), when 0.4 mm²≤h×(t₁-t₂), the first opening portion 2131 can have relatively high strength, and the electrode assembly can have a larger space from the opening, which further reduces the impact of the expansion of the electrode assembly on the welding zone between the shell and the end cover; and as compared with h×(t₁-t₂)≤10 mm², when h×(t₁-t₂)≤7.5 mm², the first opening portion occupies a relatively small space, and the space utilization of the shell is relatively high, such that the battery cell can have a relatively high energy density.

According to some embodiments of this application, 4 mm≤h≤20 mm.

h may be any value between 4.5 mm and 20 mm. Alternatively, h may be, but is not limited to 4 mm, 4.5 mm, 5.5 mm, 6.5 mm, 7.5 mm, 8.5 mm, 9.5 mm, 10.5 mm, 11.5 mm, 12.5 mm, 13.5 mm, 14.5 mm, 15.5 mm, 16.5 mm, 17.5 mm, 18.5 mm, 19.5 mm, and 20 mm.

In the foregoing solution, the distance between the first surface 22a and the second surface 2121 satisfies the foregoing relationship, which can reduce the interference risk between the electrode assembly 22 and components in the shell 211 and can also reasonably utilize the space in the shell 211, such that the battery cell 20 can have a relatively high energy density.

According to some embodiments of this application, 4.5 mm≤h≤15 mm.

Alternatively, h may be, but is not limited to, 4.5 mm, 5 mm, 6 mm, 7 mm, 8 mm, 9 mm, 10 mm, 11 mm, 12 mm, 13 mm, 14 mm, and 15 mm.

In the foregoing solution, as compared with 4.5 mm≤h≤20 mm, when 5 mm≤h≤15 mm, the interference between the electrode assembly 22 and components in the shell 211 is reduced, and the space in the shell 211 is reasonably utilized, such that the battery cell 20 has a relatively high energy density.

According to some embodiments of this application, t₁ and t₂ satisfy at least one of the following conditions: (1) 0.1 mm≤t₁-t₂≤2 mm; (2) 0.5 mm≤t₁≤4 mm; and (3) 0.4 mm≤t₂≤2 mm.

The largest thickness t₁ of the first opening portion 2131 and the thickness t₂ of the first body 2132 satisfy the above relationship, such that the processing and manufacturing difficulty of the first opening portion 2131 is low, and the first opening portion 2131 has relatively high strength; and in addition, the first opening portion 2131 occupies a relatively small assembly space, such that the battery cell 20 has a relatively high energy density.

t₁ may be any value between 0.5 mm and 4 mm. Alternatively, t₁ may be, but is not limited to 0.5 mm, 0.9 mm, 1.3 mm, 1.7 mm, 2.1 mm, 2.5 mm, 2.9 mm, 3.1 mm, 3.6 mm, and 4 mm.

t₂ may be any value between 0.4 mm and 2 mm. Alternatively, t₂ may be, but is not limited to 0.4 mm, 0.6 mm, 0.8 mm, 1 mm, 1.2 mm, 1.4 mm, 1.6 mm, 1.8 mm, 1.9 mm, and 2 mm.

t₁-t₂ may be any value between 0.1 mm and 2 mm. Alternatively, t₁-t₂ may be, but is not limited to 0.1 mm, 0.3 mm, 0.5 mm, 0.7 mm, 0.9 mm, 1.1 mm, 1.3 mm, 1.5 mm, 1.7 mm, and 2 mm.

According to some embodiments of this application, t₁ and t₂ satisfy at least one of the following conditions: (1) 0.2 mm≤t₁-t₂≤1 mm; (2) 0.7 mm≤t₁≤2 mm; and (3) 0.4 mm≤t₂≤1 mm.

In the foregoing solution, as compared with t₁ and t₂ satisfying (1) 0.1 mm≤t₁-t₂≤2 mm, (2) 0.5 mm≤t₁≤4 mm, and (3) 0.4 mm≤t₂≤2 mm, when t₁ and t₂ satisfy (1) 0.2 mm≤t₁-t₂≤1 mm, (2) 0.7 mm≤t₁≤2 mm, and (3) 0.4 mm≤t₂≤1 mm, in a case that the electrode assembly 22 does not interfere with components in the shell 211, the largest thickness of the first opening portion 2131 and the thickness of the first body 2132 satisfy the foregoing relationship; and in a case that the processing and manufacturing difficulty is reduced and the strength of the first opening portion 2131 is enhanced, the first opening portion 2131 occupies a relatively small assembly space, and the battery cell 20 has a relatively high energy density.

Alternatively, t₁ may be, but is not limited to 0.7 mm, 0.85 mm, 1 mm, 1.15 mm, 1.3 mm, 1.45 mm, 1.6 mm, 1.75 mm, and 2 mm.

Alternatively, t₂ may be, but is not limited to 0.4 mm, 0.45 mm, 0.5 mm, 0.55 mm, 0.6 mm, 0.65 mm, 0.7 mm, 0.75 mm, 0.8 mm, 0.85 mm, and 1 mm.

Alternatively, t₁-t₂ may be, but is not limited to 0.2 mm, 0.3 mm, 0.4 mm, 0.5 mm, 0.6 mm, 0.7 mm, 0.8 mm, 0.9 mm, and 1 mm.

According to some embodiments of this application, t₄ satisfies 0.5 mm ≤t₄≤5 mm.

Alternatively, t₄ may be, but is not limited to 0.5 mm, 1 mm, 1.5 mm, 2 mm, 2.5 mm, 3 mm, 3.5 mm, 4 mm, 4.5 mm, and 5 mm.

Optionally, 0.9 mm ≤t₄≤2.2 mm.

Alternatively, t₄ may be, but is not limited to 0.9 mm, 1 mm, 1.2 mm, 1.4 mm, 1.6 mm, 1.8 mm, 2 mm, and 2.2 mm.

According to some embodiments of this application, t₅ satisfies 0.4 mm ≤t₅≤3 mm.

Alternatively, t₅ may be, but is not limited to 0.4 mm, 0.8 mm, 1 mm, 1.5 mm, 2 mm, 2.5 mm, and 3 mm.

Optionally, 0.7 mm ≤t₅≤1.2 mm.

Alternatively, t₅ may be, but is not limited to 0.7 mm, 0.8 mm, 0.9 mm, 1 mm, 1.1 mm, and 1.2 mm.

According to some embodiments of this application, t₆ satisfies 0.1 mm≤t₄-t₆≤0.2 mm.

According to some embodiments of this application, the battery cell 20 further includes an electrode assembly 22, where the electrode assembly 22 includes a main body 221, the main body 221 is provided with an active substance, the main body 221 has a first surface 22a facing the end cover 212, and along the direction in which the first body 2132 points to the first opening portion 2131, the first opening portion 2131 extends beyond the first surface 22a.

In a view along the thickness direction of the first wall 213, the first opening portion 2131 does not overlap the main body 221.

In the foregoing solution, along the direction in which the first body 2132 points to the first opening portion 2131, the first opening portion 2131 extends beyond the first surface 22a, which can reduce the risk of interference between the first opening portion 2131 and the main body 221.

In some embodiments, along a direction in which the second body 2142 points to the second opening portion 2141, the second opening portion 2141 extends beyond the first surface 22a.

In a view along the thickness direction of the first wall 213, the second opening portion 2141 does not overlap the main body 221.

In the foregoing solution, along the direction in which the second body 2142 points to the second opening portion 2141, the second opening portion 2141 extends beyond the first surface 22a, which can reduce the risk of interference between the second opening portion 2141 and the main body 221.

Referring to FIG. 10, according to some embodiments of this application, the shell 211 is welded to the end cover 212 to form a welding zone 210, and an average grain size of a portion of the first opening portion 2131 except the welding zone 210 is greater than an average grain size of the first body 2132, where the average grain size is an average grain size of grains in the thickness direction of the first wall 213.

The welding zone 210 is a zone formed by welding the shell 211 and the end cover 212. In some embodiments, the welding zone 210 may be called a welding mark.

The thickness direction of the first wall 213 may be parallel to direction Z.

Standard reference for testing methods of average grain size: GB/T 6394-2017 Method for Measuring Average Grain Size of Metals and GB/T 13298-2017 Method for Measuring Grain Size of Metallic Materials by Electron Rear View Microscope.

In the foregoing solution, the average grain size of the portion of the first opening portion 2131 except the welding zone 210 is greater than the average grain size of the first body 2132, which is beneficial to enhancing the strength of the first opening portion 2131, making the first opening portion 2131 have relatively high strength, and reducing the risk of cracking of the shell 211 near the welding zone 210 between the shell 211 and the end cover 212.

According to some embodiments of this application, in a cross section of the first wall 213 parallel to the thickness direction of the first wall 213, the number of grains in a portion of the first opening portion 2131 located below the welding zone 210 is greater than or equal to 15 in the width direction of the cross section.

A width direction of the cross section may be parallel to direction Z.

"A portion of the first opening portion 2131 located below the welding zone 210" means that in FIG. 10, along the direction in which the first opening portion 2131 in the X direction points to the first body 2132, a portion of the first opening portion 2131 located below the welding zone 210, that is, along the direction in which the first opening portion 2131 points to the first body 2132, a portion of the first opening portion 2131 located far away from the welding zone 210.

In the foregoing solution, in the width direction of the cross section, the number of grains is greater than or equal to 15, which is beneficial to enhancing the strength of the first opening portion 2131 and making the first opening portion 2131 have relatively high strength.

According to some embodiments of this application, the average grain size of the portion of the first opening portion 2131 except the welding zone 210 is in a range of 70 µm to 1200 µm; and/or the average grain size of the first body 2132 is in a range of 30 µm to 1000 µm.

Alternatively, the average grain size of the portion of the first opening portion 2131 except the welding zone 210 may be, but is not limited to, 70 µm, 80 µm, 90 µm, 100 µm, 200 µm, 300 µm, 400 µm, 500 µm, 600 µm, 700 µm, 800 µm, 900 µm, 1000 µm 1100 mm, and 1200 µm.

Alternatively, the average grain size of the portion of the first body 2132 may be, but is not limited to, 30 µm, 40 µm, 50 µm, 60 µm, 70 µm, 80 µm, 90 µm, 100 µm, 200 µm, 300 µm, 400 µm, 500 µm, 600 µm, 700 µm, 800 µm, 900 µm, and 1000 µm.

In the foregoing solution, the average grain size of the first opening portion 2131 and/or the average grain size of the first body 2132 satisfy the foregoing relationship, which is beneficial to enhancing the strength of the first opening portion 2131 and making the first opening portion 2131 have relatively high strength.

According to some embodiments of this application, an average grain size of a portion of the second opening portion 2141 except the welding zone 210 is greater than an average grain size of the second body 2142, where the average grain size is an average grain size of grains in the thickness direction of the second wall 214.

In the foregoing solution, the average grain size of the portion of the second opening portion 2141 except the welding zone 210 is greater than the average grain size of the second body 2142, which is beneficial to enhancing the strength of the second opening portion 2141, making the second opening portion 2141 have relatively high strength, and reducing the risk of cracking of the shell 211 near the welding zone 210 between the shell 211 and the end cover 212.

According to some embodiments of this application, in a cross section of the second wall 214 parallel to the thickness direction of the second wall 214, the number of grains in a portion of the second opening portion 2141 located below the welding zone 210 is greater than or equal to 15 in the width direction of the cross section.

A width direction of the cross section is parallel to direction Y.

"A portion of the second opening portion 2141 located below the welding zone 210" means that along the direction in which the second opening portion 2141 in the X direction points to the second body 2142, a portion of the second opening portion 2141 located below the welding zone 210, that is, along the direction in which the second opening portion 2141 points to the second body 2142, a portion of the second opening portion 2141 located far away from the welding zone 210.

In the foregoing solution, in the width direction of the cross section, the number of grains is greater than or equal to 15, which is beneficial to enhancing the strength of the second opening portion 2141 and making the second opening portion 2141 have relatively high strength.

According to some embodiments of this application, the average grain size of the portion of the second opening portion 2141 except the welding zone 210 is in a range of 70 µm to 1200 µm; and/or the average grain size of the second body 2142 is in a range of 30 µm to 1000 µm.

Alternatively, the average grain size of the portion of the second opening portion 2141 except the welding zone 210 may be, but is not limited to, 70 µm, 80 µm, 90 µm, 100 µm, 200 µm, 300 µm, 400 µm, 500 µm, 600 µm, 700 µm, 800 µm, 900 µm, 1000 µm 1100 µm, and 1200 µm.

Alternatively, the average grain size of the portion of the second body 2142 may be, but is not limited to, 30 µm, 40 µm, 50 µm, 60 µm, 70 µm, 80 µm, 90 µm, 100 µm, 200 µm, 300 µm, 400 µm, 500 µm, 600 µm, 700 µm, 800 µm, 900 µm, and 1000 µm.

In the foregoing solution, the average grain size of the second opening portion 2141 and/or the average grain size of the second body 2142 satisfy the foregoing relationship, which is beneficial to enhancing the strength of the second opening portion 2141 and making the second opening portion 2141 have relatively high strength.

According to some embodiments of this application, the shell 211 is a prismatic structure with openings at two ends, the end cover 212 is provided in two, and the two end covers 212 respectively close the two openings.

When the shell 211 is a prismatic structure, the battery cell 20 may be a prismatic battery. In other embodiments, the shell 211 may be in a shape of hexagonal prism, octagonal prism, or the like.

When a positive electrode tab and a negative electrode tab are arranged at two ends of the electrode assembly 22, the shell 211 has two openings, and a positive electrode terminal and a negative electrode terminal can be respectively arranged on the two end covers 212 to be electrically connected to the positive electrode tab and the negative electrode tab respectively, so as to facilitate the charge and discharge of the battery cell 20.

In the foregoing solution, the opening is provided on each of the two ends of the shell 211, and the two openings are thickened so as to reduce the risk of cracking of the shell 211 near the welding zone between the shell 211 and the end cover 212.

According to some embodiments of this application, an embodiment of this application provides a battery 100, where the battery 100 includes the battery cell 20 according to any one of the foregoing embodiments.

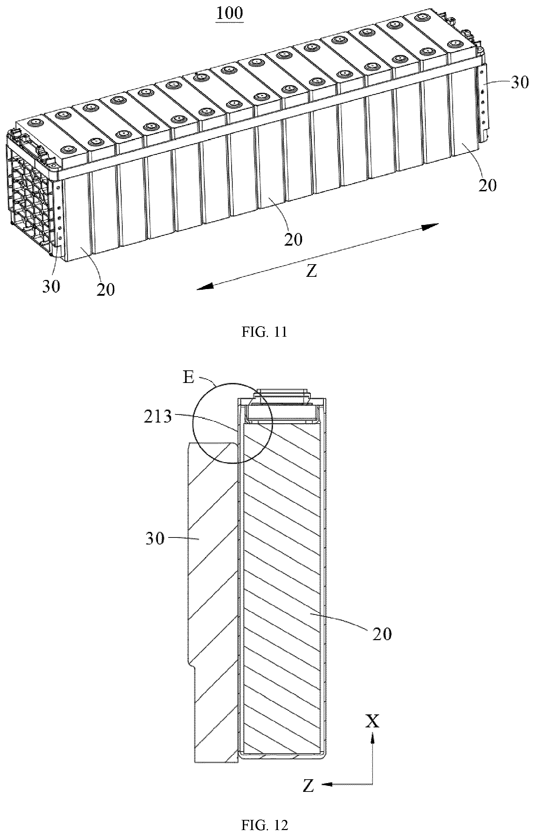

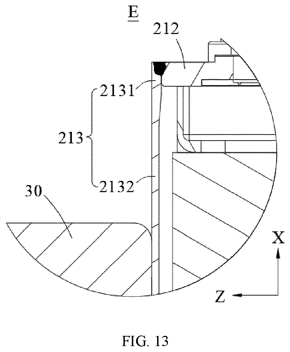

Referring to FIG. 11 to FIG. 13, FIG. 11 is a schematic assembly diagram of an end plate and a plurality of battery cells according to some embodiments of this application, FIG. 12 is a schematic assembly diagram of an end plate and a battery cell according to an embodiment of this application, and FIG. 13 is a locally enlarged view of position E in FIG. 12.

According to some embodiments of this application, the battery cell 20 is provided in plurality, the plurality of battery cells 20 are stacked in a third direction Z, and the battery 100 further includes an end plate 30, where along the third direction Z, the end plate 30 is arranged at an end of the plurality of battery cells 20, the third direction Z, the second direction Y, and the first direction X are perpendicular to each other, and along a direction in which the first body 2132 points to the first opening portion 2131, at least part of the first opening portion 2131 extends beyond the end plate 30.

The plurality of battery cells 20 are stacked along the third direction Z. In the third direction Z, the end plate 30 is arranged at the end of the plurality of battery cells 20, and the end plate 30 is connected to the battery cell 20 located at the end of the plurality of battery cells 20 in the third direction Z. The end plate 30 can limit the battery cells 20 at the end and constrain the deformation of the battery cells 20.

In the foregoing solution, the end plate 30 is arranged at the end of the plurality of battery cells 20 in the third direction Z, and the end plate 30 has a relatively large connection area with the shell 211 of the adjacent battery cell 20 to form constraints on the shell 211, reducing the risk of cracking of the shell 211 near the welding zone between the shell 211 and the end cover 212.

According to some embodiments of this application, the end plate 30 is arranged facing the first wall 213.

In the foregoing solution, the end plate 30 faces the first wall 213, and the end plate 30 has a relatively large contact area with the first body 2132, such that the end plate 30 can constrain the first wall 213 during the charge and discharge cycling of the battery cell 20, so as to reduce the risk of cracking of the shell 211 near the welding zone between the shell 211 and the end cover 212.

According to some embodiments of this application, an embodiment of this application provides an electric device, where the electric device includes the battery cell 20 or the battery 100 according to any one of the foregoing embodiments.

The electric device may be any one of the systems or devices mentioned above that use the battery cell 20 or the battery 100, and the battery cell 20 or the battery 100 is configured to supply electric energy.

According to some embodiments of this application, an embodiment of this application provides an energy storage apparatus, where the energy storage apparatus includes the battery cell 20 or the battery 100 according to any one of the foregoing embodiments.

According to some embodiments of this application, referring to FIG. 3 to FIG. 10, an embodiment of this application provides a battery cell 20, where the battery cell 20 is in a rectangular parallelepiped shape. The battery cell 20 includes a housing 21, an electrode assembly 22, and an electrode terminal 23. The electrode assembly 22 is arranged in the housing 21; the housing 21 includes a shell 211 and an end cover 212; the electrode terminal 23 is arranged on the end cover 212; and the electrode terminal 23 is connected to a tab 222 of the electrode assembly 22 through an adapter 24. The shell 211 has an opening. The shell 211 includes two first walls 213 oppositely arranged along a third direction Z, two second walls 214 oppositely arranged along a second direction Y, and a bottom wall 215. The two first walls 213 and two second walls 214 surround the bottom wall 215, and the two first walls 213 and two second walls 214 are integrally formed with the bottom wall 215, and the bottom wall 215 and the end cover 212 are arranged oppositely in the first direction X. The end cover 212 is connected to the first wall 213 and the second wall 214 to close the opening.

The first wall 213 includes a first opening portion 2131 and a first body 2132 sequentially distributed along a first direction X. The first body 2132 is farther away from the opening than the first opening portion 2131, and a thickness of the first opening portion 2131 is greater than a thickness of the first body 2132. A largest thickness of the first opening portion 2131 is denoted as t₁, the thickness of the first body 2132 is denoted as t₂, and a dimension of the first wall 213 in the second direction Y is denoted as a, satisfying 120≤a/(t₁-t₂)≤6000.

The second wall 214 includes a second opening portion 2141 and a second body 2142 sequentially distributed along the first direction X. The second body 2142 is farther away from the opening than the second opening portion 2141. The second opening portion 2141 includes a third section 2141a and a fourth section 2141b connected to each other, where the third section 2141a, the fourth section 2141b, and the second body 2142 are sequentially distributed along the first direction X, and the end cover 212 is connected to the third section 2141a. A largest thickness of the fourth section 2141b is greater than a thickness of the second body 2142, a largest thickness of the fourth section 2141b is greater than a largest thickness of the third section 2141a, a second step surface 2143 is formed between the fourth section 2141b and the third section 2141a, and the end cover 212 overlaps the second step surface 2143.

For the battery cell 20 according to this embodiment of this application, the dimension of the first wall 213 in the second direction Y and the difference between the largest thickness of the first opening portion 2131 and the thickness of the first body 2132 satisfy the foregoing relationship, facilitating processing and manufacturing, such that the first opening portion 2131 can have relatively high strength, which can reduce the risk of fatigue cracking of the shell 211 near the welding zone between the shell 211 and the end cover 212 and improve the reliability of the battery cell 20. In addition, the first opening portion 2131 occupies a relatively small assembly space, such that the battery cell 20 can have a relatively high energy density. The end cover 212 overlaps the second step surface 2143, which facilitates the positioning of the end cover 212. At least part of the fourth section 2141b is a heat-affected zone after the end cover 212 is welded with the third section 2141a. The largest thickness of the fourth section 2141b is greater than the thickness of the second body 2142, and the largest thickness of the fourth section 2141b is greater than the largest thickness of the third section 2141a, which can reduce the risk of cracking of the shell 211 near the welding zone between the shell 211 and the end cover 212 due to the thermal runaway or excessive gas production of the battery cell 20, reduce the risk of cracking of the second wall 214 and improve the reliability of the battery cell 20.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
a housing, comprising a shell and an end cover, wherein the shell is provided with an opening, the shell comprises a first wall, the first wall comprises a first opening portion and a first body sequentially distributed along a first direction, the first direction is parallel to a thickness direction of the end cover, the first body is farther away from the opening than the first opening portion, a thickness of the first opening portion is greater than a thickness of the first body, and the end cover is connected to the first opening portion and closes the opening;
wherein a largest thickness of the first opening portion is denoted as t₁, the thickness of the first body is denoted as t₂, and a dimension of the first wall in a second direction is denoted as a, satisfying 120≤a/(t₁-t₂)≤6000, wherein the second direction, a thickness direction of the first wall, and the first direction are perpendicular to each other.

2. The battery cell according to claim 1, wherein 400≤a/(t₁-t₂)≤3000, optionally, 500≤a/(t₁-t₂)≤2000.

3. The battery cell according to claim 1 or 2, wherein 70 mm≤a≤600 mm.

4. The battery cell according to any one of claims 1 to 3, wherein 100 mm≤a≤500 mm.

5. The battery cell according to any one of claims 1 to 4, wherein the first opening portion comprises a first section and a second section connected to each other, wherein the first section, the second section, and the first body are sequentially distributed along the first direction, a largest thickness of the second section is greater than the thickness of the first body, the largest thickness of the second section is greater than a largest thickness of the first section, and the end cover is connected to the first section.

6. The battery cell according to claim 5, wherein a first step surface is formed between the second section and the first section, and the end cover overlaps the first step surface.

7. The battery cell according to any one of claims 1 to 6, wherein the shell further comprises a second wall, wherein the second wall is arranged adjacent to the first wall and connected to the end cover, and an area of the outer surface of the first wall is greater than an area of the outer surface of the second wall.

8. The battery cell according to claim 7, wherein the second wall comprises a second opening portion and a second body sequentially distributed along the first direction, wherein the second body is farther away from the opening than the second opening portion, and a largest thickness of the second opening portion is greater than a thickness of the second body.

9. The battery cell according to claim 8, wherein a dimension of the second wall in a third direction is denoted as b, satisfying 40 mm≤b, wherein the third direction, the second direction, and the first direction are perpendicular to each other.

10. The battery cell according to claim 8 or 9, wherein the second opening portion comprises a third section and a fourth section connected to each other, wherein the third section, the fourth section, and the second body are sequentially distributed along the first direction, a largest thickness of the fourth section is greater than the thickness of the second body, the largest thickness of the fourth section is greater than a largest thickness of the third section, a second step surface is formed between the fourth section and the third section, and the end cover overlaps the second step surface and is connected to the third section.

11. The battery cell according to any one of claims 1 to 10, wherein the battery cell further comprises an electrode assembly, wherein the electrode assembly is arranged in the housing, the electrode assembly comprises a main body, the main body is provided with an active substance, the main body has a first surface facing the end cover, the end cover has a second surface facing away from the inside of the battery cell, and along the thickness direction of the end cover, a distance between the first surface and the second surface is denoted as h, satisfying 0.3 mm²≤h×(t₁t₂)≤10 mm².

12. The battery cell according to claim 11, wherein 0.4 mm²≤h×(t₁-t₂)≤7.5 mm².

13. The battery cell according to claim 11 or 12, wherein 4 mm≤h≤20 mm.

14. The battery cell according to claim 13, wherein 4.5 mm≤h≤15 mm.

15. The battery cell according to any one of claims 1 to 14, wherein t₁ and t₂ satisfy at least one of the following conditions:
(1). 0.1 mm≤t₁-t₂≤2 mm;
(2). 0.5 mm≤t₁≤4 mm; and
(3). 0.4 mm≤t₂≤2 mm.

16. The battery cell according to claim 15, wherein t₁ and t₂ satisfy at least one of the following conditions:
(1). 0.2 mm≤t₁-t₂≤1 mm;
(2). 0.7 mm≤t₁≤2 mm; and
(3). 0.4 mm≤t₂≤1 mm.

17. The battery cell according to any one of claims 1 to 16, wherein the battery cell further comprises an electrode assembly, wherein the electrode assembly comprises a main body, the main body is provided with an active substance, the main body has a first surface facing the end cover, and along a direction in which the first body points to the first opening portion, the first opening portion extends beyond the first surface.

18. The battery cell according to any one of claims 1 to 17, wherein the shell is welded to the end cover to form a welding zone, and an average grain size of a portion of the first opening portion except the welding zone is greater than an average grain size of the first body, wherein the average grain size is an average grain size of grains in the thickness direction of the first wall.

19. The battery cell according to claim 18, wherein in a cross section of the first wall parallel to the thickness direction of the first wall, the number of grains in a portion of the first opening portion located below the welding zone is greater than or equal to 15 in the width direction of the cross section.

20. The battery cell according to claim 18 or 19, wherein the average grain size of the portion of the first opening portion except the welding zone is in a range of 70 µm to 1200 µm; and/or the average grain size of the first body is in a range of 30 µm to 1000 µm.

21. A battery, comprising the battery cell according to any one of claims 1 to 20.

22. The battery according to claim 21, wherein the battery cell is provided in plurality, the plurality of battery cells are stacked in a third direction, and the battery further comprises an end plate, wherein along the third direction, the end plate is arranged at an end of the plurality of battery cells, the third direction, the second direction, and the first direction are perpendicular to each other, and along a direction in which the first body points to the first opening portion, at least part of the first opening portion extends beyond the end plate.

23. The battery of claim 22, wherein the end plate is arranged facing the first wall.

24. An electric device, comprising the battery cell according to any one of claims 1 to 20 or the battery according to any one of claims 21 to 23, wherein the battery cell or the battery is configured to supply electric energy.

25. An energy storage apparatus, comprising the battery cell according to any one of claims 1 to 20 or the battery according to any one of claims 21 to 23.
